# EUROPEAN PATENT SPECIFICATION

(11) **EP 3 321 031 B1**
(45) Date of publication and mention of the grant of the patent: **18.12.2019**
(21) Application number: 17001833.7
(22) Date of filing: 09.11.2017
(51) Int. Cl.: B23Q 3/155

(54) **APPARATUS COMPRISING A TOOL CHANGER DEVICE AND A LINEARLY TRANSLATING HEAD.**
VORRICHTUNG MIT EINER WERKZEUGWECHSLERVORRICHTUNG UND EINEM LINEAR BEWEGBAREN KOPF.
APPAREIL COMPRENANT UN DISPOSITIF DE CHANGEMENT D'OUTIL ET UNE TETE DE TRANSLATION LINEAIRE.

(30) Priority: 11.11.2016 IT 201600114326; 08.09.2017 IT 201700101093
(43) Date of publication of application: 16.05.2018
(73) Proprietor: CFT Rizzardi S.r.l., 10040 Rivalta di Torino (TO) (IT)
(72) Inventor: Rizzardi, Renzo, 10040 Rivalta di Torino (TO) (IT)
(74) Representative: Aprà, Mario

(56) References cited:
- EP-A1- 2 803 444
- DE-A1- 2 443 962
- JP-A- 2009 255 218
- US-A- 5 853 358

## Description

The present invention relates to an apparatus including a tool changer device and a linearly translating head.

In particular, the present invention relates to a mechanical and fully autonomous tool changer device, mounted on a linearly translating head and having a contrasting surface, to which the device is brought automatically and alternatively into contact, or in close proximity, without contact, by means of movements in a direction essentially at a right angle to the direction of translation of the head.

Said head is provided with a cam exchanger mechanism, i.e. brushless motor means, that cause an ordered series of intermittent linear and rotary movements of an output shaft, to which is fixed a rigid arm, extending in at least one radial direction and carrying at least one tool-holder cone gripper.

Tool changer devices are known for example from Patent Document EP-A-2 803 444.

There is a need to use CNC machine tools with different spindle heads, that can be installed on the same machine by means of an automatic head changer device. However, while this procedure is relatively easy to perform in the tool-holder storage unit, since sleeves can be fitted for two or more different types of cone, it is more problematic on the gripper arm, since the cone gripping elements have different sizes.

Generally, the cones used on these machines are:
- ISO 50 with milling heads for roughing operations;
- ISO 40 with milling heads for finishing operations;
- HSK63 with electro-spindles for finishing operations;
- CAPTO C8 or C1O for turning operations.

The main object of the present invention is to provide a tool changer device of the type described, wherein at least one gripper arm can indifferently grip and block, for example, the cones ISO 50, ISO 40 and HSK 63, and possibly even the cones Capto C8 and C10, without requiring any initial pre-setting.

A further object of the present invention is to provide a tool changer device of the type described, which has a compact, small and simplified structure.

In view of these objects, the present invention provides an apparatus, the essential characteristic of which is the subject of the main claim, while further advantageous characteristics of the invention are described in the dependent claims.

The present invention will become more apparent from the following detailed description, with reference to the drawing attached hereto, which is purely exemplary and therefore non-limiting, in which:
- Fig. 1 shows a front elevation view of the device, with parts omitted, according to an example of an embodiment of the present invention, in the condition where two tool-holders are blocked in respective closed grippers;
- Fig. 2 shows a longitudinal cross-section view of the device shown in Fig. 1;
- Fig. 3 shows a similar view to that of Fig. 1, in the condition, however, wherein the two tool-holders are free in the respective grippers;
- Fig. 4 shows a longitudinal cross-section view of the device shown in Fig. 3;
- Fig. 5 shows a similar view to that of Fig. 1, in the condition, however, wherein the two tool-holders are free and the respective grippers are open;
- Fig. 6 shows a longitudinal cross-section view of the device shown in Fig. 5.

With reference to the drawing, the number 10 indicates the tool changer device as a whole, according to the afore-mentioned example of an embodiment of the invention.

In particular, said mechanical and fully autonomous tool changer device 10 is mounted on a linearly translating head (of an already known type and not shown), for example in the direction of the Y axis, and has a contrasting surface S, against which the device is brought automatically and alternatively into contact, or in close proximity, without contact, by means of movements in a direction, for example X, essentially at a right angle to said direction of translation of the head.

Said head is provided, in a known manner and therefore not shown, with a cam exchanger mechanism, respectively brushless motor means, that cause an ordered series of intermittent linear and rotary movements of an output shaft A, with an axis X-X to which is fixed a rigid arm 10.1, extending in at least one radial direction and carrying at least one tool-holder cone gripper. In the example shown, said arm 10.1 is symmetrically extended in two opposing radial directions with respect to said shaft A and supports, at a first free end, a first gripper 11 of a first tool-holder PU1 and, at a second free end, a second gripper 11 of a second tool-holder PU2, where the external diameter of said first tool-holder PU1 is greater than the external diameter of said second tool-holder PU2.

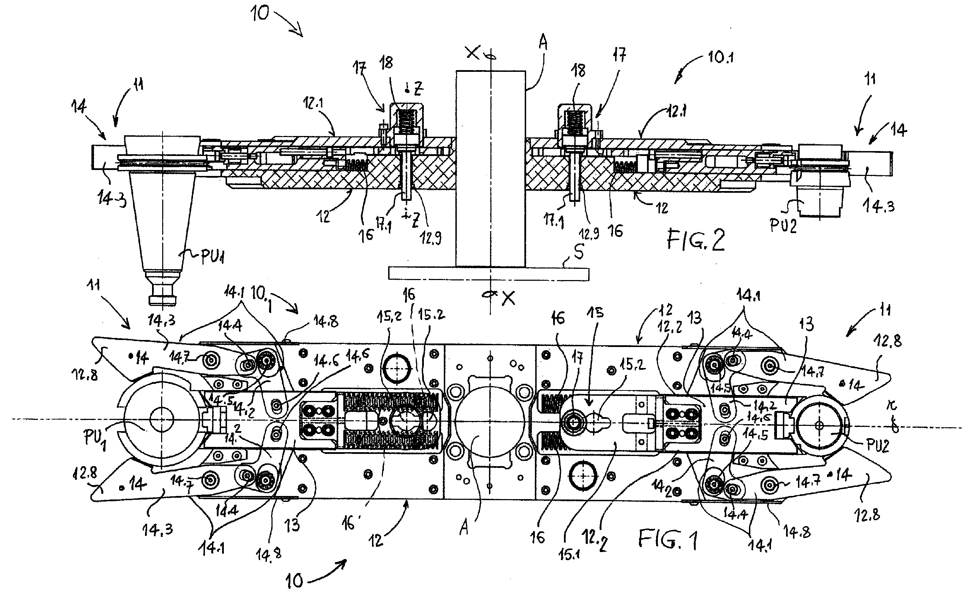

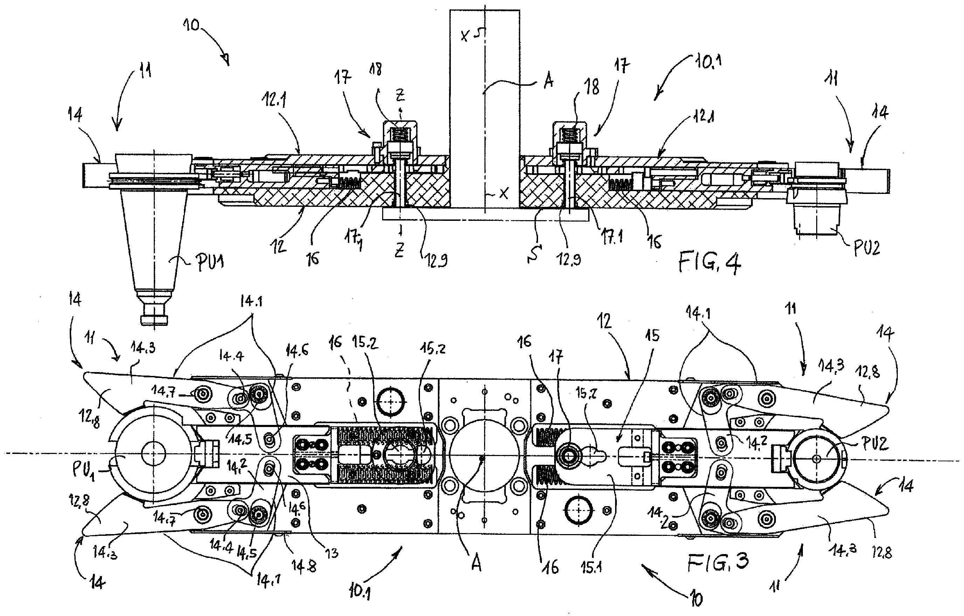

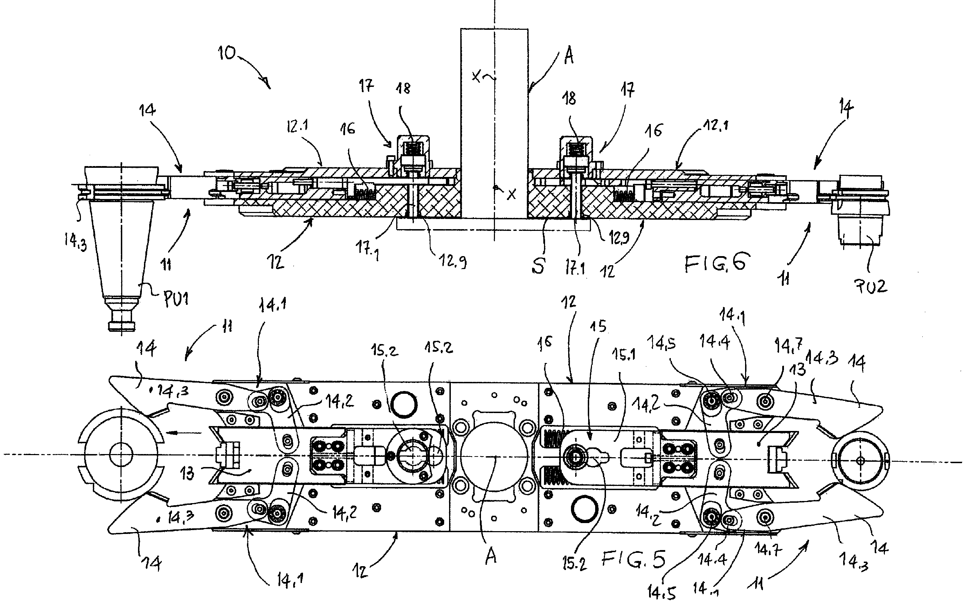

In particular each gripper 11 comprises:
- a box-type body 12, integral with said rigid arm 10.1, closed by means of a removable cover 12.1 and in which, in a free end area, there are provided slide means 13 that can move with a straight-line alternating movement, in the direction of a line (r) essentially at a right angle to said axis X-X, along corresponding sliding guide means 12.2, between a set-back position near said shaft A and an advanced position distal to said shaft A;
- a pair of clamps 14 of said gripper 11, specularly symmetrical with respect to a plane passing through said axis X-X and said line (r), wherein each gripper clamp 14 comprises a respective double joint lever 14.1 including a first rod 14.2 and a second rod 14.3 hinged to one another at a respective end, by means of a common pin 14.4 with an axis parallel to said axis X-X, where said first rod 14.2 is hinged, in an intermediate position, by means of a pin 14.5 fixed to said box-type body 12 and having an axis parallel to said axis X-X and, at the opposite end, fixed to said slide means 13, by means of a pin 14.6 fixed to said slide means 13 and having an axis parallel to said axis X-X, and said second rod 14.3 is hinged, in an intermediate position, by means of a pin 14.7 fixed to said box-type body 12 and having an axis parallel to said axis X-X, where the free end 12.8 of said second rod 14.3 protrudes with respect to said free end of said box-type body 12 and provides a gripping part of the corresponding clamp 14 of said gripper 11;
- blocking means 15 integral with said slide means 13 and comprising a plate member 15.1 with at least one through hole 15.2 with an axis Z-Z parallel to said axis X-X;
- elastic means 16 that elastically move said slide means 13 towards said advanced position and said clamps 14 to a mutually near position with gripper closed;
- shutter means 17, fixed to said arm 10.1 and comprising a rod member 17.1 extending through said at least one through hole 15.2 of said blocking means 15 and a corresponding through hole 12.9 provided in said box-type body 12;
- elastic means 18 that keep said rod member 17.1 of said shutter means 17 partially extended beyond said hole 12.9 of said box-type body 12 and passing through said at least one hole 15.2 with interference, when said device 10 is out of contact with said contrasting surface S of said stationary head (Figs. 1, 2) while, when said device 10 is in contact with or in close proximity to said contrasting surface S of said head (Figs. 3 - 6), said rod 17.1 of said shutter means 17 is re-inserted into said through hole 12.9 of said box-type body 12, opposing the action of said elastic means 18, and is positioned passing without interference through said at least one hole 15.2.

It will be noted that said second rod 14.3 of each double-joint lever 14.1 is partially resting against a respective outer protective cover 14.8, placed substantially flush with said double-joint lever and fixed to said box-type body 12.

Furthermore, said rod member 17.1 of said shutter means 17 has, around said at least one through hole 15.2 of said blocking means 15, a surface portion that is conically countersunk towards the free end of the respective rod and, correspondingly, said at least one through hole 15.2 of said blocking means 15 has a conically countersunk circumferential portion with a shape that is substantially complementary to that of said conically countersunk surface portion of said rod member 17.1.

With reference to the embodiment of the invention shown in the drawing, as indicated above, said rigid arm 10.1 is symmetrically extended in two opposing radial directions with respect to the axis X-X of said shaft A and supports, at a first free end, a first gripper 11 of a first tool-holder PU1 and, at a second free end, a second gripper 11 of a second tool-holder PU2, where the external diameter of said first tool-holder PU1 is greater than the external diameter of said second tool-holder PU2.

It will be noted that when said slide means 13 of said gripper 11 are in said set-back position, near to said shaft A, they allow the mutual opening of said clamps 14 of the corresponding gripper 11 on said tool-holder PU1, PU2, and when said slide means 13 of said gripper 11 are in said advanced position, distal to said shaft A, they cause the mutual closure of said clamps 14 of the corresponding gripper 11 on a tool-holder PU1, PU2.

Furthermore, said first gripper 11 and said second gripper 11 each comprise:
- respective blocking means 15 integral with corresponding slide means 13, wherein a plate member 15.1 has at least two through holes 15.2 with axes Z-Z parallel to said axis X-X and aligned with one another in a direction parallel to said direction (r),
- respective shutter means 17, fixed to a corresponding box-type body 12, 12.1, wherein a rod member 17.1 extends through one of said at least two through holes 15.2 of said respective blocking means 15 and through said through hole 12.9 provided in said box-type body 12.

Moreover, said rod member 17.1 of said gripper 11 extends through a through hole 15.2 of said pair of through holes, near said shaft A, when said slide 13 is in said advanced position, and said rod member 17.1 of said gripper 11 extends through a through hole 15.2 of said pair of through holes, distal to said shaft A, when said slide 13 is in said set-back position.

Furthermore, an aperture 15.3 is provided between said at least two through holes 15.2 of said blocking means 15 substantially in said direction (r), and permits the free passage of said rod member 17.1 from one hole to the other 15.2 of said at least two holes 15.2 and vice-versa.

In brief, each gripper 11 mounted on the exchanger arm 10.1 has two spring-loaded clamps 14 that, when gripping a tool, open and adapt to the dimensions of the cone PU1, PU2, respectively. During cone extraction, said two clamps 14 are blocked by the insertion of the shutter means 17 in the corresponding holes 15.2 of the blocking means 15, so that, during the exchange and translation phase of the exchanger arm 10.1, the tool cones PU1, PU2 are irreversibly blocked.

As can be seen from the previous description, the tool changer device according to the invention achieves the objects set out in the introduction, in a simple, effective and safe manner.

## Claims

1. Apparatus including a tool changer device (10) and a linearly translating head, on which said tool changer device is mounted on and having a contrasting surface (S), to which the device (10) can be brought automatically and alternatively into contact, or in close proximity, without contact, by means of movements in a direction essentially at a right angle to the direction of translation of the head, where said head is provided with a cam exchanger mechanism, respectively brushless motor means that cause an ordered series of intermittent linear and rotary movements of an output shaft (A), with an axis (X-X) and to which is fixed a rigid arm (10.1), extending in at least one radial direction and being able to carry at least one tool-holder cone (PU1, PU2) gripper (11), wherein said at least one gripper (11) comprises:
- a box-type body (12), integral with said rigid arm (10.1), closed by means of a removable cover (12.1) and in which, in a free end area, there are provided slide means (13) that can move with a straight-line alternating movement, in the direction of a line (r) essentially at a right angle to said axis (X-X), along corresponding sliding guide means (12.2), between a set-back position near said shaft (A) and an advanced position distal to said shaft (A);
- a pair of clamps (14) of said gripper (11), specularly symmetrical with respect to a plane passing through said axis (X-X) and said line (r), wherein each gripper clamp (14) comprises a respective double joint lever (14.1) including a first rod (14.2) and a second rod (14.3) hinged to one another at a respective end, by means of a common pin (14.4) with an axis parallel to said axis (X-X), where said first rod (14.2) is hinged, in an intermediate position, by means of a pin (14.5) fixed to said box-type body (12) and having an axis parallel to said axis (X-X) and, at the opposite end, fixed to said slide means (13), by means of a pin (14.6) fixed to said slide means (13) and having an axis parallel to said axis (X-X), and said second rod (14.3) is hinged, in an intermediate position, by means of a pin (14.7) fixed to said box-type body (12) and having an axis parallel to said axis (X-X), where the free end (12.8) of said second rod (14.3) protrudes with respect to said free end of said box-type body (12) and provides a gripping part of the corresponding clamp (14) of said gripper (11);
wherein said at least one gripper (11) comprises:
- blocking means (15) integral with said slide means (13) and comprising a plate member (15.1) with at least one through hole (15.2) with an axis (Z-Z) parallel to said axis (X-X);
- elastic means (16) that able to elastically move said slide means (13) towards said advanced position and said clamps (14) to a mutually closer position with gripper closed;
- shutter means (17), fixed to said arm (10.1) and comprising a rod member (17.1) extending through said at least one through hole (15.2) of said blocking means (15) and a corresponding through hole (12.9) provided in said box-type body (12);
- elastic means (18) that keep said rod member (17.1) of said shutter means (17) partially extended beyond said hole (12.9) of said box-type body (12) and passing through said at least one hole (15.2) with interference, when said device (10) is out of contact with said contrasting surface (S) of said stationary head while, when said device (10) is in contact with or in close proximity to said contrasting surface (S) of said head, said rod (17.1) of said shutter means (17) is re-inserted into said through hole (12.9) of said box-type body (12), opposing the action of said elastic means (18), and is positioned passing without interference through said at least one hole (15.2).

2. Apparatus according to claim 1, **characterized in that** said rod member (17.1) of said shutter means (17) has, around said at least one through hole (15.2) of said blocking means (15), a surface portion that is conically countersunk towards the free end of the respective rod and, correspondingly, said at least one through hole (15.2) of said blocking means (15) has a conically countersunk circumferential portion with a shape that is substantially complementary to that of said conically countersunk surface portion of said rod member (17.1).

3. Apparatus according to one of the previous claims, wherein said rigid arm (10.1) is symmetrically extended in two opposing radial directions with respect to said shaft (A), **characterized in that** said rigid arm (10.1) supports, at a first free end, a first gripper (11) of a first tool-holder (PU1) and, at a second free end, a second gripper (11) of a second tool-holder (PU2), where the external diameter of said first tool-holder (PU1) is greater than the external diameter of said second tool-holder (PU2), **and in that** when said slide means (13) of a gripper (11) are in said set-back position, near to said shaft (A), they allow the mutual opening of said clamps (14) of the corresponding gripper (11) on said tool-holder (PU1, PU2), and when said slide means (13) of a gripper (11) are in said advanced position, distal to said shaft (A), they cause the mutual closure of said clamps (14) of the corresponding gripper (11) on a tool-holder (PU1, PU2).

4. Apparatus according to claim 3, **characterized in that** said first gripper (11) and said second gripper (11) each comprise:
- respective blocking means (15) integral with corresponding slide means (13), wherein a plate member (15.1) has at least two through holes (15.2) with axes (Z-Z) parallel to said axis (X-X) and aligned with one another in a direction parallel to said direction (r),
- respective shutter means (17), fixed to a corresponding box-type body (12, 12.1), wherein a rod member (17.1) extends through one of said at least two through holes (15.2) of said respective blocking means (15) and through said through hole (12.9) provided in said box-type body (12);
**and in that** said rod member (17.1) of a gripper (11) extends through a through hole (15.2) of said pair of through holes, distal to said shaft (A), when said slide (13) is in said set-back position, and said rod member (17.1) of a gripper (11) extends through a through hole (15.2) of said pair of through holes, near said shaft (A), when said slide (13) is in said advanced position.

5. Apparatus according to claim 4, **characterized in that** it comprises an aperture (15.3) extending between said at least two through holes (15.2) of said blocking means (15) substantially in said direction (r), permitting the free passage of said rod member (17.1) from one hole to the other (15.2) of said at least two holes (15.2) and vice-versa.

## Patentansprüche

1. Eine Vorrichtung zum Werkzeugwechsel (10), die auf einem linear verschiebbaren Kopf montiert ist und eine Kontrastfläche (S) aufweist, in Bezug auf welche die Vorrichtung (10) selbst automatisch und alternativ durch Verlagerungen in einer Richtung, die im Wesentlichen orthogonal zur Bewegungsrichtung des Kopfes ist, in Kontakt oder in unmittelbare Nähe und außer Kontakt gebracht werden kann, wobei der Kopf mit einem Nocken-Austauschmechanismus oder mit bürstenlosen Motormitteln ausgestattet ist, die eine geordnete Reihe von intermittierenden linearen sowie auch rotierenden Bewegungen einer Abtriebswelle (A) bewirken, versehen mit einer Achse (X-X), und auf der ein starrer Arm befestigt ist (10.1), der sich in mindestens einer radialen Richtung erstreckt und zum Tragen mindestens eines Greifers (11) eines Werkzeughalterkegels (PU1, PU2) geeignet ist, **wobei** der besagte mindestens eine Greifer (11) Folgendes umfasst:
- einen Kastenkörper (12), der in Bezug auf den besagten starren Arm (10.1) unlöslich verbunden ist, verschlossen mittels einer abnehmbaren Abdeckung (12.1), in der in einem freien Endbereich Gleitvorrichtungen (13) vorgesehen sind, die sich mit einer geradlinigen Wechselbewegung gemäß der Richtung einer geraden Linie (r), die im Wesentlichen orthogonal zu der besagten Achse (X-X) verläuft, entlang entsprechender Gleitführungsvorrichtungen (12.2) zwischen einer hinteren Position, proximal zu der besagten Welle (A), und einer vorderen Position, distal von der besagten Welle (A), bewegen können;
- ein Paar Zangen (14) des besagten Greifers (11), spiegelsymmetrisch in Bezug auf eine Ebene, die durch die besagte Achse (X-X) und die besagte Gerade (r) verläuft, wobei jede Zange (14) des Greifers einen entsprechenden Kniehebel (14.1) mit einer ersten Stange (14.2) und einer zweiten Stange (14.3) umfasst, die an einem jeweiligen Ende mittels eines gemeinsamen Stiftes (14.4) mit einer zu der besagten Achse (X-X) parallelen Achse klappbar verbunden ist, wobei die besagte erste Stange (14.2) in der Zwischenposition mittels eines festen Stiftes (14.5) in Bezug auf den besagten Kastenkörper (12) klappbar verbunden ist und eine Achse aufweist, die parallel zu der besagten Achse (X-X) verläuft, und am entgegengesetzten Ende in Bezug auf die besagten Gleitvorrichtungen (13) mittels eines Stiftes (14.6) an den besagten selbigen Gleitvorrichtungen (13) befestigt ist und eine Achse aufweist, die parallel zu der besagten Achse (X-X) verläuft, und die besagte zweite Stange (14.3) in einer Zwischenposition mittels eines festen Stiftes (14.7) in Bezug auf den besagten Kastenkörper (12) klappbar verbunden ist und eine zu der besagten Achse (X-X) parallele Achse aufweist, bei der das freie Ende (12.8) der besagten zweiten Stange (14.3) in Bezug auf das freie Ende des besagten Kastenkörpers (12) herausragt und einen Greifteil der entsprechenden Zange (14) des besagten Greifers (11) bereitstellt;
wobei mindestens ein Greifer (11) Folgendes umfasst:
- Blockierungsmittel (15), die mit den besagten Gleitvorrichtungen (13) fest verbunden sind und ein Plattenelement (15.1) mit mindestens einem Durchgangsloch (15.2) mit einer Achse (Z-Z) umfassen, die parallel zu der besagten Achse (X-X) verläuft;
- elastische Mittel (16), die in der Lage sind, die besagten Gleitvorrichtungen (13) elastisch in Richtung der besagten vorderen Position und die besagten Zangen (14) in eine beidseitig enge geschlossene Greifer-Anordnung zu bewegen;
- Verschlussmittel (17), die in Bezug auf den besagten Arm (10.1) befestigt sind und ein Element mit Schaft (17.1) umfassen, das sich durch das besagte mindestens eine Durchgangsloch (15.2) der besagten Blockierungsmittel (15) und ein entsprechendes Durchgangsloch (12.9), das in dem Kastenkörper (12) vorgesehen ist, erstreckt;
- elastische Mittel (18), die das besagte Element mit dem Schaft (17.1) der besagten Verschlussmittel (17) teilweise über das Loch (12.9) des besagten Kastenkörpers (12) hinaus erstreckt halten und das mindestens eine Loch (15.2) mit Interferenz durchlaufen, wenn die besagte Vorrichtung (10) nicht mit der besagten Kontrastfläche (S) des besagten stationären Kopfes in Kontakt steht, während, wenn die besagte Vorrichtung (10) in Kontakt, bzw. in enger Nähe in Bezug auf die besagte Kontrastfläche (S) des besagten Kopfes steht, der besagte Schaft (17.1) der besagten Verschlussmittel (17) im besagten Durchgangsloch (12.9) des besagten Kastenkörpers (12) eingezogen ist, im Gegensatz zur Wirkung der besagten elastischen Mittel (18), und bereit ist, ohne Interferenz durch das mindestens eine Loch (15.2) hindurchgeführt zu werden.

2. Eine Vorrichtung gemäß Anspruch 1, **dadurch gekennzeichnet, dass** das besagte Element mit Schaft (17.1) der besagten Verschlussmittel (17) um das mindestens eine Durchgangsloch (15.2) der besagten Blockierungsmittel (15) herum einen Oberflächenabschnitt aufweist, der konisch ausgestellt zum freien Ende des jeweiligen Schaftes ist und dementsprechend das besagte mindestens eine Durchgangsloch (15.2) der besagten Blockierungsmittel (15) einen konisch ausgestellten Umfangsabschnitt mit einer Form aufweist, die im Wesentlichen komplementär zu der des besagten Teils der konisch ausgestellten Oberfläche des besagten Elementes mit Schaft (17.1) ist.

3. Eine Vorrichtung gemäß einem der vorhergehenden Ansprüche, bei der sich der besagte starre Arm (10.1) symmetrisch in zwei radialen Richtungen in Bezug auf die besagte Welle (A) erstreckt, **dadurch gekennzeichnet, dass** der besagte starre Arm (10.1) an einem freien Ende einen ersten Greifer (11) eines ersten Werkzeughalters (PU1) und an einem zweiten freien Ende einen zweiten Greifer (11) eines zweiten Werkzeughalters (PU2) stützt, wobei der Außendurchmesser des besagten ersten Werkzeughalters (PU1) größer ist als der Außendurchmesser des besagten zweiten Werkzeughalters (PU2), **und dadurch gekennzeichnet, dass,** wenn die besagten Gleitvorrichtungen (13) eines Greifers (11) in der besagten hinteren Position angeordnet sind, proximal in Bezug auf besagte Welle (A), das gegenseitige Öffnen der besagten Zangen (14) des entsprechenden Greifers (11) in Bezug auf den Werkzeughalter (PU1, PU2) zulassen, und wenn die besagten Gleitvorrichtungen (13) eines Greifers (11) in der besagten vorderen Position, distal in Bezug auf besagte Welle (A), angeordnet sind, das gegenseitige Schließen der besagten Zangen (14) des entsprechenden Greifers (11), der auf einen Werkzeughalter (PU1, PU2) eingreift, sicherstellen.

4. Eine Vorrichtung gemäß Anspruch 3, **dadurch gekennzeichnet, dass** der besagte erste Greifer (11) und der besagte zweite Greifer (11) jeweils Folgendes umfassen:
- jeweilige Blockierungsmittel (15), die mit den entsprechenden Gleitvorrichtungen (13) fest verbunden sind, wobei ein Plattenelement (15.1) mindestens zwei Durchgangslöcher (15.2) mit Achsen (Z-Z) aufweist, die parallel zu der besagten Achse (X-X) verlaufen und zueinander in einer Richtung ausgerichtet sind, die parallel zu der besagten Richtung (r) verläuft;
- entsprechende Verschlussmittel (17), befestigt in Bezug auf einen entsprechenden Kastenkörper (12, 12.1), bei dem sich ein Element mit Schaft (17.1) durch eines der mindestens zwei Durchgangslöcher (15.2) der besagten Blockierungsmittel (15) und durch das in dem besagten Kastenkörper (12) vorgesehene besagte Durchgangsloch (12.9) erstreckt;
**und dadurch gekennzeichnet, dass** sich das besagte Element mit Schaft (17.1) eines Greifers (11) durch ein Durchgangsloch (15.2) des besagten Paares von Durchgangslöchern, distal in Bezug auf besagte Welle (A), erstreckt, wenn sich die besagte Gleitvorrichtung (13) in der besagten hinteren Position befindet, und sich das besagte Element mit Schaft (17.1) eines Greifers (11) durch ein Durchgangsloch (15.2) des besagten Paares von Durchgangslöchern, proximal in Bezug auf besagten Schaft (A), erstreckt, wenn sich die besagte Gleitvorrichtung (13) in der besagten vorderen Position befindet.

5. Eine Vorrichtung gemäß Anspruch 4, **dadurch gekennzeichnet, dass** sie eine Öffnung (15.3) umfasst, die sich zwischen den besagten mindestens zwei Durchgangslöchern (15.2) der besagten Blockierungsmittel (15) im Wesentlichen in der besagten Richtung (r) erstreckt, die den freien Durchgang des besagten Elementes mit Schaft (17.1) von einem Loch zum anderen (15.2) der besagten mindestens zwei Löcher (15.2) und umgekehrt ermöglicht.

## Revendications

1. Dispositif (10) de changement d'outil, monté sur une tête à translation linéaire et possédant une surface de butée (S), par rapport à laquelle le dispositif (10) même peut être porté de manière automatique et alternativement en contact, ou à proximité immédiate, et hors contact, au moyen de déplacements en direction essentiellement perpendiculaire à la direction de translation de la tête, dans laquelle sont prévus un mécanisme échangeur à came, c'est-à-dire des moyens à moteur brushless, qui entraînent une série ordonnée de mouvements intermittents, linéaires et rotatifs, d'un arbre de sortie (A), ayant un axe (X-X) et sur lequel est fixé un bras rigide (10.1), étendu dans au moins une direction radiale et adapté à porter au moins une pince (11) de préhension d'un cône porte-outil (PU1, PU2), **où** ladite au moins pince (11) comprend :
- un corps de type boîtier (12), solidaire par rapport audit bras rigide (10.1), fermé au moyen d'un couvercle amovible (12.1) et dans lequel, dans une zone d'extrémité libre, sont prévus des moyens à glissière (13) mobile en mouvement alternatif rectiligne, selon la direction d'une droite (r) essentiellement perpendiculaire par rapport audit axe (X-X), le long de moyens de guidage de coulissement (12.2) correspondants, entre une position reculée proximale dudit arbre (A) et une position avancée distale dudit arbre (A) ;
- une paire de mâchoires (14) de ladite pince (11), symétrique de manière spéculaire par rapport à un plan passant par ledit axe (X-X) et par ladite droite (r), où chaque mâchoire (14) de pince comprend un respectif levier à genouillère (14.1) incluant une première tige (14.2) et une deuxième tige (14.3) articulées entre elles sur une extrémité respective, au moyen d'un pivot commun (14.4) à axe parallèle audit axe (X-X), où ladite première tige (14.2) est articulée, en position intermédiaire, au moyen d'un pivot (14.5) fixe par rapport audit corps de type boîtier (12) et ayant un axe parallèle audit axe (X-X) et, à l'extrémité opposée, par rapport auxdits moyens à glissière (13), au moyen d'un pivot (14.6) fixé auxdits mêmes moyens à glissières (13) et ayant un axe parallèle audit axe (X-X), et ladite deuxième tige (14.3) est articulée, en position intermédiaire, au moyen d'un pivot (14.7) fixe par rapport audit corps de boîtier (12) et ayant un axe parallèle audit axe (X-X), où l'extrémité libre (12.8) de ladite deuxième tige (14.3) fait saillie par rapport à ladite extrémité libre dudit corps de type boîtier (12) et fournit une partie de préhension de la mâchoire (14) correspondante de ladite pince (11) ;
où au moins une pince (11) comprend :
- des moyens de blocage (15) solidaires par rapport auxdits moyens à glissière (13) et comprenant un organe à plaquette (15.1) possédant au moins un trou passant (15.2) à axe (Z-Z) parallèle audit axe (X-X) ;
- des moyens élastiques (16) qui sont adaptés pour déplacer élastiquement lesdits moyens à glissière (13) vers ladite position avancée et lesdites mâchoires (14) en disposition réciproquement rapprochée de pince fermée ;
- des moyens à obturateur (17), fixes par rapport audit bras (10.1) et comprenant un organe avec tige (17.1) étendu à travers ledit au moins trou passant (15.2) desdits moyens de blocage (15) et un trou passant (12.9) correspondant prévu dans ledit corps de type boîtier (12) ;
- des moyens élastiques (18) qui maintiennent ledit organe avec tige (17.1) desdits moyens à obturateur (17) partiellement étendu au-delà dudit trou (12.9) dudit corps de type boîtier (12) et passant à travers ledit au moins trou (15.2) avec interférence, quand ledit dispositif (10) est hors contact par rapport à ladite surface de butée (S) de ladite tête fixe tandis que, lorsque ledit dispositif (10) est en contact, respectivement à proximité immédiate, par rapport à ladite surface de butée (S) de ladite tête, ladite tige (17.1) desdits moyens à obturateur (17) est rentrée dans ledit trou passant (12.9) dudit corps de type boîtier (12), en antagonisme à l'action desdits moyens élastiques (18), et est disposée passante sans interférence à travers ledit au moins trou (15.2).

2. Dispositif selon la revendication 1, **caractérisé par le fait que** ledit organe avec tige (17.1) desdits moyens à obturateur (17) possède, autour dudit au moins trou passant (15.2) desdits moyens de blocage (15), une partie de surface coniquement évasée vers l'extrémité libre de la tige respective et, de manière correspondante, ledit au moins trous passant (15.2) desdits moyens de blocage (15) possède une position circonférentielle coniquement évasée et de forme substantiellement complémentaire à celle de ladite partie de surface coniquement évasée dudit organe avec tige (17.1).

3. Dispositif selon l'une des revendications précédentes, où ledit bras rigide (10.1) est étendu symétriquement dans deux directions radiales opposées par rapport audit arbre (A), **caractérisé par le fait que** ledit arbre rigide (10.1) supporte, à une première extrémité libre, une première pince (11) de préhension d'un premier porte-outil (PU1) et, à une deuxième extrémité libre, une deuxième pince (11) de préhension d'un deuxième porte-outil (PU2), où le diamètre extérieur dudit premier porte-outil (PU1) est plus grand que celui dudit deuxième porte-outil (PU2), **et par le fait que** lorsque lesdits moyens à glissière (13) d'une pince (11) sont disposés dans ladite position reculée, proximale par rapport audit arbre (A), ils permettent l'ouverture réciproque desdites mâchoires (14) de la pince (11) correspondante par rapport audit porte-outil (PU1, PU2), et lorsque lesdits moyens à glissière (13) d'une pince (11) sont disposé dans ladite position avancée, distale par rapport audit arbre (A), ils assurent la fermeture réciproque desdites mâchoires (14) de la pince (11) correspondante en prise sur un porte-outil (PU1, PU2).

4. Dispositif selon la revendication 3, **caractérisé par le fait que** ladite première pince (11) et ladite deuxième pince (11) comprennent chacune :
- des moyens de blocage (15) respectifs solidaires par rapport aux moyens à glissière (13) correspondants, où un organe à plaquette (15.1) possède au moins deux trous passants (15.2) à axes (Z-Z) parallèles audit axe (X-X) et alignés entre eux en direction parallèle à ladite direction (r),
- des moyens à obturateur (17) respectifs, fixes par rapport à un corps de type boîtier (12, 12.1) correspondant, où un organe avec tige (17.1) est étendu à travers un desdits au moins deux trous passants (15.2) desdits moyens de blocage (15) respectifs et à travers ledit trou passant (12.9) prévu dans ledit corps de type boîtier (12) ;
**et par le fait que** ledit organe avec tige (17.1) d'une pince (11) est étendu à travers un trou passant (15.2) de ladite paire de trous passants, distal par rapport audit arbre (A), quand ladite glissière (13) est dans ladite position reculée, et ledit organe avec tige (17.1) d'une pince (11) est étendu à travers un trou passant (15.2) de ladite paire de trous passants, proximal par rapport audit arbre (A), quand ladite glissière (13) est dans ladite position avancée.

5. Dispositif selon la revendication 4, **caractérisé par le fait qu'**il comprend une ouverture (15.3) étendue entre au moins lesdits deux trous passants (15.2) desdits moyens de blocage (15) substantiellement selon ladite direction (r), qui permet le passage libre dudit organe avec tige (17.1) de l'un à l'autre trou (15.2) desdits au moins deux trous (15.2) et inversement.
